(19) Europäisches Patentamt
European Patent Office
Office européen des brevets

(11) **EP 3 811 103 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **19732878.4**

(22) Anmeldetag: **14.05.2019**

(51) Internationale Patentklassifikation (IPC):
*G01S 7/03* (2006.01)        *G01S 7/35* (2006.01)

(52) Gemeinsame Patentklassifikation (CPC):
**G01S 7/03; G01S 7/35**

(86) Internationale Anmeldenummer:
**PCT/DE2019/100436**

(87) Internationale Veröffentlichungsnummer:
**WO 2019/242794 (26.12.2019 Gazette 2019/52)**

(54) **RADARANORDNUNG UND VERFAHREN ZUM BETREIBEN EINER RADARANORDNUNG**

RADAR ASSEMBLY AND METHOD FOR OPERATING A RADAR ASSEMBLY

DISPOSITIF RADAR ET PROCÉDÉ DE FONCTIONNEMENT D'UN DISPOSITIF RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2018   DE 102018115079**

(43) Veröffentlichungstag der Anmeldung:
**28.04.2021   Patentblatt 2021/17**

(73) Patentinhaber: **Altavo GmbH**
**01069 Dresden (DE)**

(72) Erfinder:
• **LAABS, Martin**
**01097 Dresden (DE)**
• **PLETTEMEIER, Dirk**
**01187 Dresden (DE)**

(74) Vertreter: **Kraus & Lederer PartGmbB**
**Thomas-Wimmer-Ring 15**
**80539 München (DE)**

(56) Entgegenhaltungen:
WO-A1-99/35510          US-A- 5 146 616
US-A1- 2018 074 179

**Beschreibung**

Die Erfindung betrifft eine Radaranordnung, umfassend eine Sendeeinheit mit einem ersten Oszillator sowie einer Sendeantenne und eine Empfängereinheit mit einem zweiten Oszillator, einer ersten Mischstufe sowie einer Empfangsantenne.

Die Erfindung betrifft auch ein Verfahren zum Betreiben einer Radaranordnung, wobei eine erste Oszillatorfrequenz bereitgestellt wird, aus welcher zumindest mittelbar ein Primärsignal erzeugt und über eine Sendeantenne abgestrahlt wird und wobei eine zweite Oszillatorfrequenz bereitgestellt wird, mittels derer zumindest mittelbar eine Zwischenfrequenz durch ein Mischen eines empfangenen reflektierten Signals mit der zweiten Oszillatorfrequenz erzeugt wird.

Unter dem Begriff Radar (engl: radio detection and ranging; RADAR) werden üblicherweise Erkennungs- bzw. Ortungsverfahren verstanden, welche auf der Basis sogenannter elektromagnetischer Wellen im Radiofrequenzbereich arbeiten.

Die in einer Sendeeinheit einer Radaranordnung erzeugten elektromagnetischen Wellen werden gebündelt als ein sogenanntes Primärsignal mittels einer geeigneten Antenne ausgesendet. Dieses Primärsignal wird von Objekten, welche sich in der Richtung des abgestrahlten Primärsignals befinden, reflektiert und als sogenanntes Echo bzw. reflektiertes Signal von einer Antenne einer Empfängereinheit empfangen. Das empfangene reflektierte Signal kann nachfolgend nach verschiedenen Kriterien ausgewertet bzw. analysiert werden. Derart können Informationen über Objekte, wie beispielsweise ihre Entfernung, ihre Lage bzw. Winkel, ihre Bewegungsrichtung und Geschwindigkeit und/oder Eigenschaften der Objekte gewonnen werden.

Aus dem Stand der Technik sind verschiedene Verfahren und Systeme im Bereich der Radartechnik bekannt. Eine Einteilung der Radargeräte erfolgt beispielsweise in Primärradargeräte für nicht kooperative Ziele oder Objekte und Sekundärradargeräte für kooperative Ziele oder Objekte. Die Gruppe der Primärradargeräte wird weiter in Pulsradaranordnungen und Dauerstrichradaranordnungen unterteilt.

Die US 2018 / 074179 A1 offenbart ein Radarsystem und insbesondere ein Radarsystem, das vorwärtsgerichtetes Radar verwendet, um Ziele zu erkennen. Bisher bekannte Radarsysteme verwenden die Grundfrequenz des Radarsenders, um das vom Radarsystem empfangene Echo zu analysieren. Natürliche Objekte, wie beispielsweise Felsen, erzeugen jedoch auch ein Echo zurück zum Radarsystem mit der Grundfrequenz des Radarsenders. Folglich haben die bisher bekannten Radarsysteme komplexe Algorithmen verwendet, um zwischen natürlichen Objekten, wie beispielsweise Felsen, und militärischen Zielen zu unterscheiden, um zu versuchen, das empfangene Echo bildlich zu verarbeiten.

Das neue Radarsystem der US 2018 / 074179 A1 umfasst einen Hochfrequenzsender, der ein Radarsignal mit einer Grundfrequenz erzeugt. Ein Modulator moduliert das Radarsignal mit einer Modulationsfrequenz und das modulierte Radarsignal wird an eine Sendeantenne gekoppelt und abgestrahlt. Ein Empfänger empfängt ein Echo des Radarsignals. Ein Filter isoliert die Harmonischen der Grundfrequenz von dem Echo und ein Demodulator vergleicht dann die Phase der Harmonischen des Echos mit der Phase der Harmonischen des Radarsignals und erzeugt ein dafür repräsentatives Ausgangssignal. Ein Bildgebungsalgorithmus empfängt das Ausgangssignal und erzeugt ein zweidimensionales Bild des empfangenen Echos und zeigt dieses Bild dann auf einer Anzeige an.

Die US 5 146 616 A bezieht sich auf Radarsender und -empfänger und insbesondere auf das Senden und Empfangen von Spektralkomponenten einer vorbestimmten Folge kurzer Pulse. Die zu lösende Aufgabe besteht darin, ein verbessertes Radar bereitzustellen, das in der Lage ist, niedrig fliegende Meeresskimmer-Raketen zu detektieren. Ein weiteres Ziel ist die Bereitstellung eines Radarsystems, das eine Impulsfolge mit einer Dauer in der Größenordnung von 200 Pikosekunden mit einer momentanen Bandbreite in der Größenordnung von 5 GHz verwendet. Noch eine weitere Aufgabe besteht darin, ein Impulsradar bereitzustellen, das eine Folge von extrem kurzen Impulsen verwendet, aber die Impulse nicht durch Ein- und Ausschalten des Hochfrequenz-Sendesignals erzeugt.

Zur Lösung dieser Aufgaben wird ein Impulsradar bereitgestellt, das mehrere Sender und Empfänger verwendet, einen für jede Spektralkomponente einer vorbestimmten synthetisierten Impulsfolge. Jeder Sender arbeitet im Wesentlichen in einem CW- oder Dauerstrichmodus. Die Spektralanteile werden nicht getrennt nacheinander übertragen. Sie werden alle zusammen übertragen. Um in allen Sendern Phasenkohärenz zu erreichen, ist ein Hauptoszillator mit einem Oberwellengenerator gekoppelt, der alle erforderlichen Spektralkomponenten zum Treiben einer Vielzahl von Endverstärkern liefert. Die Endverstärker sind Filterverstärker, die phasenstarre spannungsgesteuerte Oszillatoren verwenden.

Aus der WO 99 / 35510 A1 ist eine Signaldetektionsvorrichtung zum Bestimmen des Vorhandenseins einer oder mehrerer beziehungsweise einer Vielzahl von vorbestimmten Signalfrequenzen bekannt. Es ist eine Aufgabe der WO 99 / 35510 A1, einen Radar-/Laserdetektor zum Lokalisieren von Signalen entlang mehrerer Frequenzbänder bereitzustellen.

Der bereitgestellte Detektor enthält ein Signalerfassungsmittel, ein Verkehrswarnmittel und ein Lokaloszillator-Abschaltmittel und/oder ein Lokaloszillator-Frequenzverschiebungsmittel. Der Detektor enthält auch ein Signalerfassungsmittel. Die Signalerfassungseinrichtung ist in der Lage, Signale entlang mehrerer vorbestimmter Frequenzbänder zu erfassen. Es wird erwogen, dass der Detektor ferner ein Verkehrswarnmittel umfasst. Dieses Verkehrswarnmittel umfasst eine visuelle Anzeige, eine akustische Anzeige oder beides.

So sind beispielsweise Dauerstrichradaranordnungen (engl. continous wave - CW) bekannt, welche insbesondere in Sensoranwendungen weite Verbreitung finden. Im Gegensatz zu Pulsradaranordnungen werden in Dauerstrichradaranordnungen kontinuierliche Signale verwendet. Bekannt ist es auch, dass diese kontinuierlichen Signale in ihrer Frequenz verändert werden können. Die Pulsformung geschieht nach dem Stand der Technik meist synthetisch in einer nachträglichen Signalverarbeitung.

Bekannt sind auch Radarsysteme, welche mit Frequenzsstufen arbeiten (Frequency Stepped Continous Wave - FSCW). Derartige Radarsysteme können eine sehr hohe Genauigkeit erreichen, da eine phasenrichtige Auswertung der Signale möglich ist. Ein Nachteil derartiger Systeme besteht darin, dass jede Frequenz für das zu erzeugende Primärsignal einzeln erzeugt und umgeschaltet werden muss. Außerdem muss nach jedem Umschalten abgewartet werden, bis sich ein stabiler Systemzustand eingestellt hat, bevor das reflektierte Signal von der Empfängereinheit ordnungsgemäß ausgewertet werden kann. Für Radaranwendungen, welche eine hohe Messgeschwindigkeit erfordern, ist das FSCW System daher nur bedingt geeignet, da die Messzeit dieser Systeme relativ hoch ist.

Aus dem Stand der Technik bekannte FSCW-Systeme arbeiten mittels eines Frequenzgenerators, der sequenziell verschiedene, nacheinander benötigte Frequenzen erzeugt. Die mittels dieses Generators bzw. Frequenzgenerators erzeugten Primärsignale werden nacheinander über eine Antenne der Sendeeinheit abgestrahlt, von einem Objekt bzw. Ziel reflektiert und von einer Antenne einer Empfängereinheit als das reflektierte Signal empfangen. In dieser Empfängereinheit wird das empfangene, reflektierte Signal beispielsweise mittels eines Frequenzmischers auf eine konstante Zwischenfrequenz ZF umgesetzt. In einem besonderen Fall kann diese Zwischenfrequenz auch bei 0 Hz liegen.

Die weitere Verarbeitung des empfangenen und umgesetzten reflektierten Signals, bei welcher beispielsweise eine Phasen- und Amplitudenschätzung, eine Pulsformung mittels Fouriertransformation und anderes mehr erfolgen kann, erfolgt in der Regel nach einer Analog-Digital-Wandlung des Zwischenfrequenzsignals. Dieses gewandelte, digitale Zwischenfrequenzsignal kann mittels bekannter Verfahren zur digitalen Signalverarbeitung weiterverarbeitet werden. Für die mit einem derartigen FSCW-System notwendige synthetische Pulsformung müssen mehrere Frequenzschritte, beispielsweise mehr als 100 Frequenzschritte, durchgeführt werden.

Für jeden einzelnen Frequenzschritt ist es notwendig, dass die Frequenzgeneratoren in der Sendeeinheit und in der Empfängereinheit beispielsweise zeitgleich umgeschaltet werden müssen. Außerdem muss es gewährleistet sein, dass sich die Radaranordnung sowohl in der Sendeeinheit als auch in der Empfängereinheit in einem eingeschwungenen Zustand befinden. Dies umfasst beispielsweise eine vollständige Ausbreitung des Signals sowie das Abklingen von transienten Signalen in den Filtern. Je nach benötigtem Eindeutigkeitsbereich muss dieser Vorgang mehrere hundert Mal wiederholt werden. Somit ist die erforderliche Messzeit mit einer derartigen Radaranordnung relativ hoch.

Nachteilig an dieser Lösung ist es somit, dass die zur Erkennung- bzw. Ortung von Objekten notwendigen Frequenzen mittels eines Frequenzgenerators nach und nach erzeugt werden müssen und dass ein qualitativ gutes Messergebnis für jede dieser Frequenzen erst nach Ablauf einer sogenannten Einschwingzeit erwartet werden kann. Somit ist ein derartiger Erkennungs- bzw. Ortungsvorgang zum Erreichen einer entsprechenden Genauigkeit der Messung sehr zeitaufwendig.

Auf der Grundlage dieses Standes der Technik besteht ein Bedarf nach einer verbesserten Radaranordnung sowie einem entsprechenden Verfahren zum Betreiben einer Radaranordnung, womit eine Messung in einer kürzeren Zeit bzw. Messzeit erfolgen kann.

Die Aufgabe der Erfindung besteht nunmehr darin, eine Radaranordnung und ein Verfahren zum Betreiben einer Radaranordnung anzugeben, womit eine Verkürzung der notwendigen Messzeit erreicht wird. Außerdem soll eine Lösung geschaffen werden, mit welcher der technische Aufwand und die Kosten bei der Fertigung einer Radaranordnung verringert werden. Zudem soll die Qualität des Sendesignals bzw. des Primärsignals verbessert werden.

Die Aufgabe wird durch eine Anordnung mit den Merkmalen gemäß Patentanspruch 1 der selbstständigen Patentansprüche gelöst. Weiterbildungen sind in den abhängigen Patentansprüchen 2 bis 6 angegeben.

Die Aufgabe wird auch durch ein Verfahren mit den Merkmalen gemäß Patentanspruch 7 der selbstständigen Patentansprüche gelöst. Weiterbildungen sind in den abhängigen Patentansprüchen 8 bis 13 angegeben.

Anstatt sequenziell einzelne Frequenzen zeitlich nacheinander für das Primärsignal zu erzeugen und abzustrahlen, werden gemäß der vorliegenden Erfindung zwei oder mehr Frequenzen gleichzeitig für das Primärsignal erzeugt und abgestrahlt. Das Primärsignal beinhaltet somit zwei oder mehr Frequenzkomponenten.

Zu diesem Zweck wird ein Mittel zur zeitgleichen Erzeugung zweier oder mehrerer Frequenzen in der Radaranordnung sowohl senderseitig als auch empfängerseitig eingesetzt. Durch dieses Mittel zur zeitgleichen Erzeugung mehrerer Frequenzen wird ein Primärsignal erzeugt, welches mehrere, für eine qualitativ hochwertige Messung von Eigenschaften eines Objekts oder Ziels, notwendige, Frequenzkomponenten beinhaltet.

Dieses Mittel kann beispielsweise ein sogenannter Frequenzkammgenerator sein.

In einer beispielhaften Ausführung kann ein derartiger Frequenzkammgenerator, beispielsweise aus Step-Recovery-Dioden aufgebaut sein, welche bei einer Anregung mit einer Oszillatorfequenz f ein Ausgangsspektrum mit Frequenzkomponenten von

$$n \times f; \; n = [s..e]; s, e \in \mathbb{Z}$$

erzeugen. Ein derartiger Frequenzkammgenerator wird sowohl in der Sendeeinheit als auch in der Empfängereinheit einer erfindungsgemäßen Radaranordnung angeordnet.

Vorgesehen ist es, dass der Frequenzabstand der einzelnen Frequenzkomponenten des in der Sendeeinheit erzeugten Spektrums des Primärsignals immer gleich zueinander ist. Somit ist der Frequenzabstand äquidistant.

Dieses mittels eines derartigen Frequenzkammgenerators erzeugte Primärsignal, welches mindestens zwei verschiedene Frequenzen bzw. Frequenzkomponenten umfasst, wird über eine Sendeantenne der Sendeeinheit abgestrahlt, von einem Objekt oder Ziel reflektiert und über eine weitere Antenne, eine Empfangsantenne, in einer Empfängereinheit als reflektiertes Signal empfangen.

In der Empfängereinheit der Radaranordnung wird das empfangene, reflektierte Signal beispielsweise mit einem Mischsignal der Form

$$n \times (f + \Delta f); \; n = [s..e]; s, e \in \mathbb{Z}$$

gemischt. Hierbei ist *n* die Anzahl der verschiedenen Frequenzen *f* bzw. Frequenzkomponenten und Δ*f* der Frequenzabstand zwischen den verschiedenen Frequenzen bzw. Frequenzkomponenten des zu erzeugenden Mischsignals. Ein derartiges Mischsignal wird oft auch als Lokaloszillator-Signal bezeichnet.

Eine Besonderheit dieses Mischsignals besteht darin, dass der Frequenzabstand zwischen den einzelnen Frequenzkomponenten des Mischsignals zwar ebenfalls äquidistant aber nicht identisch zu den Frequenzen der einzelnen Frequenzkomponenten des Primärsignals ist. Zwischen den Frequenzkomponenten des Primärsignals und den Frequenzkomponenten des Mischsignals liegt eine frequenzmäßige Verschiebung der Frequenzkomponenten vor. In einem Beispiel sind die Frequenzkomponenten des Mischsignals gegenüber den Frequenzkomponenten des Primärsignals zu höheren Frequenzen hin verschoben. Eine derartige Verschiebung kann beispielsweise 50 MHz oder 0,5 MHz betragen.

Nach dieser Frequenzmischung entsteht in der Empfängereinheit ein Zwischenfrequenzsignal ZF mit Frequenzkomponenten von

$$n \times \Delta f; \; n = [s..e]; s, e \in \mathbb{Z}.$$

Im Gegensatz zu bekannten CW-Radarsystemen ist das Zwischenfrequenzsignal nicht mehr schmalbandig, sondern beinhaltet mindestens zwei Signale bei unterschiedlicher Frequenz.

Vorgesehen ist es, das Mischsignal mittels des in der Empfängereinheit der Radaranordnung angeordneten zweiten Frequenzkammgenerators zu erzeugen. Vorgesehen ist es auch, bei der Erzeugung des Mischsignals aus dem Stand der Technik bekannte Einheiten wie einen Bandbassfilter und einen Frequenzmischer zu nutzen.

Die Bestandteile *f*, Δ*f*, *s* und *e* sollen so gewählt werden, dass in dem nach der Mischung erzeugten Zwischenfrequenzsignal bzw. der Zwischenfrequenz ZF keine Intermodulationsprodukte der Träger *a* × *f* und *b* × (*f* + Δ*f*), *a* ≠ *b*, $[a, b] \in \mathbb{Z}$ bei den gewünschten Frequenzen *n* × Δ*f* entstehen. Dies ist beispielsweise für den Fall gewährleistet, wenn der Frequenzabstand der Träger im Sendesignal kleiner $\frac{1}{2} * e \times \Delta f$ ist.

Somit stellt die Erfindung eine Möglichkeit bereit, mit welcher mit einem geringen Aufwand viele Frequenzkomponenten parallel erzeugt, abgestrahlt und anschließend empfangen sowie mittels einer vorzugsweise digitalen Signalverarbeitung anschließend getrennt und analysiert werden können.

Bei dieser Analyse können Eigenschaften des Objekts oder des Ziels wie beispielsweise Entfernung, Lage bzw. Winkel, Bewegungsrichtung bestimmt werden. Darüber hinaus ist es möglich, Aussagen über Stoffzusammensetzung, Dichte und weitere physikalische Eigenschaften des Objekts zu bestimmen.

Eine Anwendung der Erfindung kann beispielsweise im KFZ-Radarbereich zur Anwendung gelangen, wenn eine hohe Messgeschwindigkeit gefordert wird.

Darüber hinaus kann die vorliegende Erfindung auch im Bereich der Stoffstromanalyse beispielsweise in den Bereichen der Landwirtschaft oder der Industrie zum Einsatz kommen. Insbesondere ist es möglich, sich schnell bewegende Stoffe zur Qualitätssicherung und zur Prozessoptimierung mittels einer Radaranordnung zu überwachen. Derartige, sich schnell bewegende Stoffe können beispielsweise sich in einem Luftstrom in oder außerhalb einer Röhre bewegende Stoffe sein. In einer speziellen Anwendung kann derart beispielsweise der Feuchtigkeitsgehalt in einem sich bewegenden Stoff wie beispielsweise einem Getreide bestimmt werden.

Darüber hinaus können Orts- und/oder Geschwindigkeitsbestimmungen von sehr schnellen Objekten durchgeführt werden. Ein derartiges Objekt kann beispielsweise ein Projektil sein.

Eine weitere Einsatzmöglichkeit der Erfindung besteht im Einsatz in Radargeräten für autonome oder teilautonome Fahrzeuge. Hierbei kann die Erfindung eine Ergänzung oder einen Ersatz zu bestehenden bekannten Systemen wie LIDAR oder kamerabasierten Sensorsystemen darstellen.

Es kann zudem erwartet werden, dass die Signalqualität, insbesondere ein Phasenrauschen, der mittels eines Frequenzkammgenerators in einer erfindungsgemäßen Sendeeinheit einer Radaranordnung erzeugten Primärsignale, höher ist, als bei der Nutzung einer Phasenregelschleife (engl.: phase-locked loop; PLL) nach dem Stand der Technik.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:

Fig. 1: ein Blockschaltbild eines FSCW-Radarsystems nach dem Stand der Technik,

Fig. 2: eine Sendeanordnung eines erfindungsgemäßen FSCW-Radarsystems mit einem ersten Frequenzkammgenerator,

Fig. 3: eine Empfangsanordnung eines erfindungsgemäßen FSCW-Radarsystems mit einem zweiten Frequenzkammgenerator,

Fig. 4a: eine Darstellung eines idealisierten Frequenz-Amplituden-Spektrums eines Primärsignals- sowie eines reflektierten Signals mit beispielhaften Frequenzangaben für die vorliegende Erfindung,

Fig. 4b: eine Darstellung eines idealisierten Frequenz-Amplituden-Spektrums eines Mischsignals für einen erfindungsgemäßen Empfänger mit beispielhaften Frequenzangaben für die vorliegende Erfindung und

Fig. 4c: eine Darstellung eines idealisierten Frequenz-Amplituden-Spektrums eines Zwischenfrequenzsignals für einen erfindungsgemäßen Empfänger.

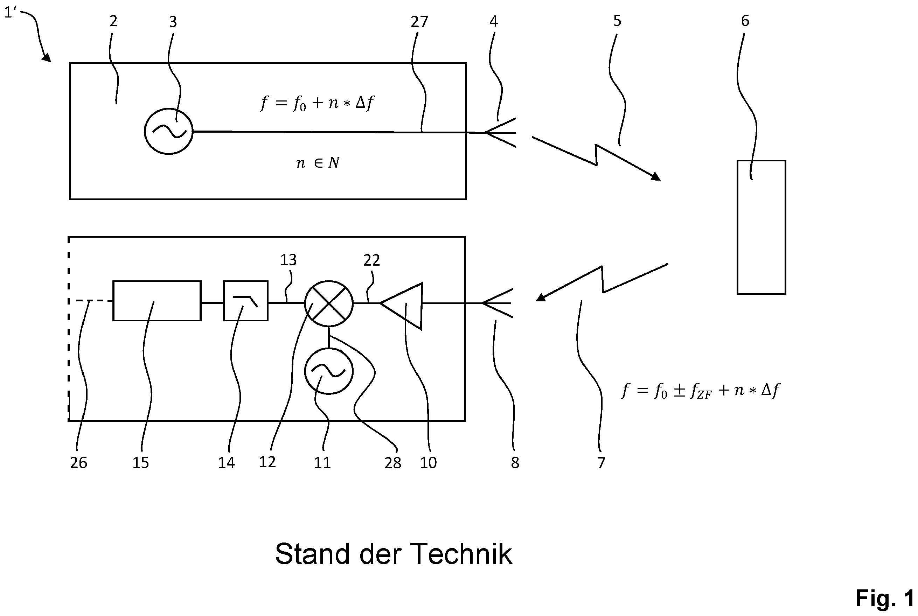

Die **Figur 1** zeigt ein Blockschaltbild einer FSCW-Radaranordnung 1' nach dem Stand der Technik, welches nur die zur Beschreibung wesentlichen Blöcke der Radaranordnung 1' zeigt. Die Radaranordnung 1' umfasst eine Sendeeinheit 2, in welcher beispielsweise eine Phasenregelschleife PLL als ein erster Oszillator 3 angeordnet ist. Diese Phasenregelschleife 3 dient der Erzeugung einer ersten einstellbaren Oszillatorfrequenz 27 für das Primärsignal 5, welches von der Sendeeinheit 2 über die Sendeantenne 4 abgestrahlt wird. Das abgestrahlte Primärsignal 5 erreicht das Objekt oder Ziel 6, von welchem zumindest ein Teil der Signalenergie des Primärsignals 5 derart reflektiert wird, dass dieser Teil der Signalenergie die Empfangsantenne 8 einer Empfängereinheit 9 als ein sogenanntes reflektiertes Signal 7 erreicht.

Das empfangene, reflektierte Signal 7 wird nach dem Stand der Technik beispielsweise mittels eines Eingangsverstärkers 10 verstärkt, wobei ein verstärktes, hochfrequentes reflektiertes Signal 22 erzeugt wird, und auf einen Eingang eines Mischers 12 gegeben. An einem zweiten Eingang des Mischers 12 ist ein zweiter Oszillator 11 angeschlossen, welcher eine Mischfrequenz bzw. eine zweite Oszillatorfrequenz 28 erzeugt, mit der der Mischer 12 das verstärkte, hochfrequente reflektierte Signal 22 in eine Zwischenfrequenz 13 umwandelt.

Nachfolgend kann diese Zwischenfrequenz 13 mittels eines ersten Bandfilters 14 gefiltert und in einem Analog-Digital-Wandler 15 in ein digitales Signal gewandelt werden. Das derart bereitgestellte digitale Signal bzw. digitales Zwischenfrequenzsignal 26 wird in einer weiteren in der Figur 1 nicht dargestellten Einheit weiterverarbeitet bzw. analysiert. Bei dieser Analyse werden Eigenschaften des Objekts oder des Ziels 6 wie beispielsweise Entfernung, Lage bzw. Winkel, Bewegungsrichtung bestimmt.

Nach diesem Stand der Technik ist es vorgesehen, dass zeitlich nacheinander mehrere verschiedene erste Oszillatorfrequenzen 27 im ersten Oszillator 3 für das Primärsignal 5 erzeugt werden müssen. Es gilt beispielsweise die Beziehung:

$$f = f_o + n * \Delta f$$

Nach diesem Stand der Technik ist es ebenfalls vorgesehen, dass zeitlich nacheinander mehrere verschiedene zweite Mischfrequenzen bzw. zweite Oszillatorfrequenzen 28 durch den zweiten Oszillator 11 zur Erzeugung der Zwischenfrequenz 13 im Mischer 12 erzeugt werden müssen, beispielsweise nach der Beziehung:

$$f = f_o \pm f_{ZF} + n * \Delta f$$

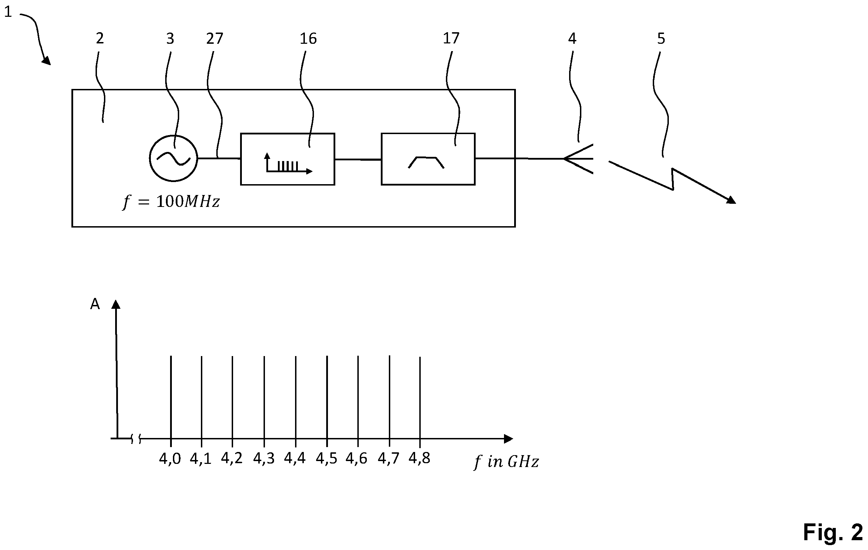

In der **Figur 2** ist eine Sendeeinheit 2 eines erfindungsgemäßen FSCW-Radarsystems 1 mit einem ersten Frequenzkammgenerator 16 gezeigt. Die Sendeeinheit 2 weist einen ersten Oszillator 3 zur Erzeugung einer ersten Oszillatorfrequenz 27 auf, mit welcher der erste Frequenzkammgenerator 16 angesteuert wird.

Ein derartiger Frequenzkammgenerator wird mittels eines nichtlinearen elektronischen Bauteils realisiert. Dies erfolgt beispielsweise durch Verwendung einer Step-Recovery Diode, einer nichtlinearen Transmissionsleitung, welche beispielsweise durch eine Leitung mit mindestens zwei Dioden in geeignetem Abstand realisiert werden kann oder durch Ausnutzung von elektrischen Lawineneffekten in Transistoren.

Der erste Frequenzkammgenerator 16 stellt an seinem Ausgang ein Primärsignal 5 mit mehreren gleich zueinander beabstandeten Frequenzkomponenten bereit. Das derart erzeugte Primärsignal 5 wird über einen zweiten Bandfilter 17 gefiltert und über die Sendeantenne 4 der Sendeeinheit 2 abgestrahlt.

Beispielhaft sind in einem Frequenz-Amplituden-Diagramm mehrere Frequenzkomponenten des erzeugten Ausgangsspektrums des Primärsignals 5 dargestellt, welche äquidistant zueinander angeordnet sind. Das Beispiel der Figur 2 zeigt, dass der ersten Oszillator 3 eine erste Oszillatorfrequenz 27 *f* von 100 MHz erzeugt.

Der mittels dieser Oszillatorfrequenz 27 *f* von 100 MHz angesteuerte erste Frequenzkammgenerator 16 stellt in einer Kombination mit dem dritten Bandfilter 19 bzw. Bandpassfilter 19 beispielhaft an seinem Ausgang mehrere äquidistant zueinander beabstandete Frequenzkomponenten an den Stellen 4,0 GHz, 4,1 GHz, 4,2 GHz, 4,3 GHz, 4,4 GHz, 4,5 GHZ, 4,6 GHz, 4,7 GHz und 4,8 GHz bereit. Das derart erzeugte und von der Sendeantenne 4 abgestrahlte Primärsignal 5 beinhaltet somit zeitgleich neun Frequenzkomponenten. Diese neun Frequenzkomponenten werden in der vorliegenden Erfindung innerhalb eines Messzyklus als Primärsignal 5 abgestrahlt. Nach dem Stand der Technik wären hierfür neun Messzyklen notwendig, welche nacheinander ablaufen würden. Somit kann die erfindungsgemäße Radaranordnung die durchzuführenden neun Messungen in einem Neuntel der nach dem Stand der Technik benötigten Messzeit realisieren.

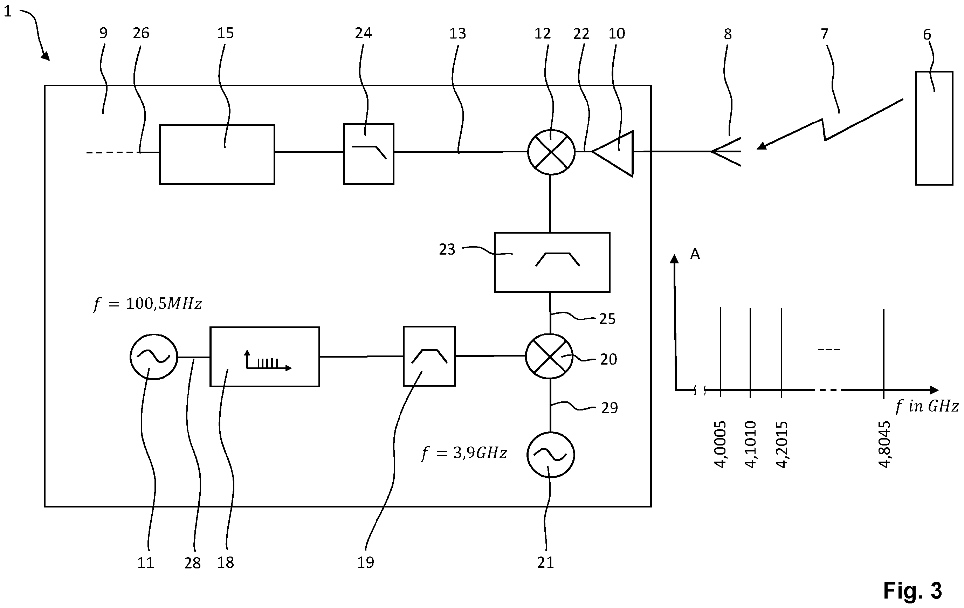

**Figur 3** zeigt eine erfindungsgemäße Empfangseinheit 9 eines erfindungsgemäßen FSCW-Radarsystems 1 mit einem zweiten Frequenzkammgenerator 18. Auch in der Empfangseinheit 9 ist ein zweiter Oszillator 11 angeordnet, welcher eine den zweiten Frequenzkammgenerator 18 ansteuernde zweite Oszillatorfrequenz 28 erzeugt. Mittels des zweiten Frequenzkammgenerators 18 wird ebenfalls ein mehrere Frequenzkomponenten beinhaltendes Signal erzeugt. Dieses mehrere Frequenzkomponenten beinhaltende Signal wird einem ersten Eingang eines zweiten Mischers 20 zugeführt. Ein zweiter Eingang des zweiten Mischers 20 ist mit einem dritten Oszillator 21 verbunden, welcher eine dritte Oszillatorfrequenz 29, von beispielsweise 3,9 GHz, für den zweiten Mischer 20 bereitstellt.

Optional kann es vorgesehen sein, dass das mehrere Frequenzkomponenten beinhaltende Signal mittels eines dritten Bandfilters 19 in seiner Bandbreite beschränkt wird, bevor es dem ersten Eingang des zweiten Mischers 20 zugeführt wird.

Der zweite Mischer 20 erzeugt an seinem Ausgang ein Mischprodukt bzw. ein Mischsignal 25, welches einem ersten Eingang des ersten Mischers 12 bereitgestellt wird. Auch dieses Mischsignal 25 kann mittels eines vierten Bandfilters 23 in seiner Bandbreite begrenzt werden, bevor sie dem ersten Eingang des ersten Mischers 12 zugeführt wird.

Ein von einem Objekt oder Ziel 6 reflektiertes hochfrequentes, reflektiertes Signal 7 wird von einer Empfangsantenne 8 empfangen, mittels eines Eingangsverstärkers 10 verstärkt und gelangt als ein verstärktes, hochfrequentes reflektiertes Signal 22 zum zweiten Eingang des ersten Mischers 12.

Im ersten Mischer 12 wird mittels des verstärkten, hochfrequenten reflektierten Signals 22 und dem vom zweiten Mischer 20 erzeugten Mischsignal 25 eine Zwischenfrequenz ZF 13 erzeugt. Die Zwischenfrequenz 13 weist gegenüber dem verstärkten, hochfrequenten reflektierten Signal 22 wesentlich niedrigere Frequenzen auf. In einem Beispiel wäre es denkbar, dass ein Subträger dieser Zwischenfrequenz 13 bei 0 Hz liegen kann. Diese Zwischenfrequenz 13 wird, wie im Stand der Technik üblich, mittels eines Analog-Digital-Wandlers 15 in ein digitales Zwischenfrequenzsignal 26 gewandelt und in einer in der Figur 3 nicht dargestellten Anordnung zur weiteren Signalverarbeitung in der Empfängereinheit 9 weiterverarbeitet bzw. analysiert. Bei dieser Analyse werden Informationen über das Objekt bzw. Ziel 6 gewonnen, wie beispielsweise ihre Entfernung, ihre Lage bzw. Winkel, ihre Bewegungsrichtung und Geschwindigkeit. Darüber hinaus können auch Eigenschaften der Objekte oder Ziele 6 selbst, wie deren stoffliche Zusammensetzung oder deren Feuchtigkeitsgehalt und andere mehr, bestimmt werden.

Optional kann die Zwischenfrequenz 13 mittels eines fünften Bandfilters 24 in seiner Bandbreite begrenzt werden, bevor es vom Analog-Digital-Wandler 15 in ein digitales Zwischenfrequenzsignal 26 umgewandelt wird.

In der in der Figur 3 gezeigten beispielhaften Ausführung der Erfindung ist es vorgesehen, dass der zweite Oszillator 11 eine zweite Oszillatorfrequenz 28 von 100,5 MHz als Ansteuersignal für den zweiten Frequenzkammgenerator 18 bereitstellt. Der dritte Oszillator 21 erzeugt eine dritte Oszillatorfrequenz 29 von 3,9 GHz. Mit dieser Konstellation ist es vorgesehen, dass das dem ersten Eingang des ersten Mischers 12 zugeführte Mischsignal 25 mehrere Frequenzkomponenten beinhaltet, wie es in dem Frequenz-Amplituden-Diagramm in der Figur 3 dargestellt ist. Diese Frequenzkomponenten liegen bei der beschriebenen Konstellation bei 4,0005 GHz, 4,1010 GHz, 4,2015 GHz, 4,3020 GHz, 4,4025 GHz, 4,5030 GHz, 4,6035 GHz, 4,7040 GHz und 4,8045 GHz. Diese durch den zweiten Frequenzkammgenerator 18 erzeugten Frequenzkomponenten sind wie die in der Sendeeinheit 2 vom ersten Frequenzkammgenerator 16 erzeugten Frequenzkomponenten gleich zueinander beabstandet. In diesem Beispiel weisen die vom zweiten Frequenzkammgenerator 18 erzeugten Frequenzkomponenten aber einen geringfügig größeren Abstand zueinander auf, welcher im Beispiel, mit einem Abstand der Frequenzkomponenten des zweiten Frequenzkammgenerator 18 von 100,5 MHz zueinander, 0,5 MHz mehr beträgt.

Diese unterschiedlichen Abstände der Frequenzkomponenten im Mischsignal 25 sind notwendig, damit sich die einzelnen Frequenzkomponenten im ersten Mischer 12 nicht untrennbar zu einer einzelnen Zwischenfrequenz 13 überlagern, sondern als ein Zwischenfrequenzkamm mit geringem Frequenzabstand der beinhalteten Frequenzkomponenten in diesem Zwischenfrequenzkamm erzeugt werden. Diese Frequenzkomponenten liegen bei der beschriebenen Konstellation bei 0,0005 GHz, 0,0010 GHz, 0,0015 GHz, 0,0020 GHz, 0,0025 GHz, 0,0030 GHz, 0,0035 GHz, 0,0040 GHz.

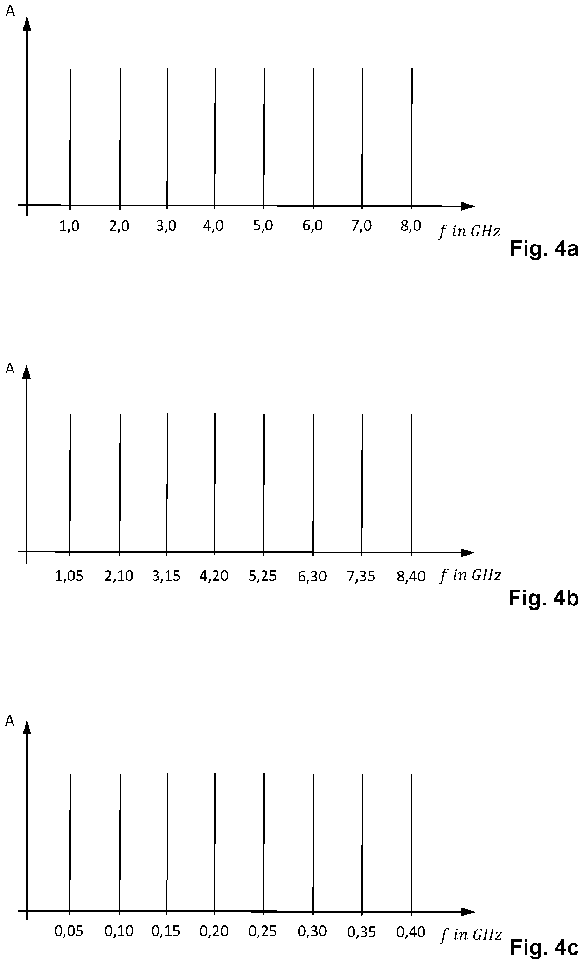

Die **Figur 4a** zeigt eine Darstellung eines idealisierten Frequenz-Amplituden-Spektrums eines Sende- und Empfangssignals (TX/RX-Signal) mit beispielhaften Frequenzangaben für die vorliegende Erfindung anhand eines zweiten Ausführungsbeispiels.

In dem gezeigten Frequenz-Amplituden-Diagramm sind beispielhaft acht Frequenzkomponenten des Primärsignals 5 gezeigt. Im Beispiel der Figur 4a liegen diese Frequenzkomponenten gleich voneinander beabstandet bei den Frequenzen 1,0 GHz, 2,0 GHz, 3,0 GHz, 4,0 GHz, 5,0 GHz, 6,0 GHz, 7,0 GHz und 8,0 GHz. Das derart erzeugte Primärsignal 5 wird über die Sendeantenne 4 der Sendeeinheit 2 abgestrahlt. Signalanteile, welche von einem Objekt oder Ziel 6 reflektiert werden und als reflektiertes Signal 7 über die Empfangsantenne 8 einer Empfängereinheit 9 empfangen werden, weisen die gleichen Frequenzkomponenten und somit den gleichen Frequenz-AmplitudenVerlauf auf, wobei deren Amplituden meist unterschiedlich zueinander und deutlich kleiner sind. In diesem Beispiel ist es vorgesehen, dass der erste Oszillator 3 eine erste Oszillatorfrequenz 27 von 1,0 GHz bereitstellt.

In der **Figur 4b** ist eine Darstellung eines idealisierten Frequenz-Amplituden-Spektrums eines Mischsignals 25 für eine erfindungsgemäße Empfangseinheit 9 in einer Radaranordnung 1 mit beispielhaften Frequenzangaben für die vorliegende Erfindung gezeigt.

Zur Erzeugung eines Zwischenfrequenzsignals 13 in der Empfangseinheit 9 ist ein spezielles Mischsignal 25 notwendig, welches mittels des zweiten Frequenzkammgenerators 18 und einer Mischung des vom zweiten Frequenzkammgenerators 18 erzeugten Ausgangssignals mit einer dritten Oszillatorfrequenz 29 in einem zweiten Mischer 20 erzeugt wird. Dieses Mischsignal 25 ist nach seiner Filterung im vierten Bandfilter 23 beispielhaft idealisiert in der Figur 4b mit den Frequenzen 1,05 GHz, 2,10 GHz, 3,15 GHz, 4,20 GHz, 5,25 GHz, 6,30 GHz 7, 35 GHz und 8,40 GHz dargestellt. Hierfür ist es vorgesehen, dass der zweite Oszillator 11 eine zweite Oszillatorfrequenz 28 von 50,0 MHz und der dritte Oszillator 21 eine dritte Oszillatorfrequenz 29 von 1,0 GHz bereitstellt.

Die **Figur 4c** zeigt eine Darstellung eines idealisierten Frequenz-Amplituden-Spektrums eines Zwischenfrequenzsignals 13 für eine erfindungsgemäße Empfängereinheit 9.

Bei der Verarbeitung des empfangenen, reflektierten Signals 7 mit dem Mischsignal 25 in einem ersten Mischer der Empfangseinheit 9 wird das in der Figur 4c gezeigte Zwischenfrequenzsignal 13 erzeugt.

Das Zwischenfrequenzsignal 13 weist in diesem Fall beispielsweise die Frequenzen 0,05 GHz, 0,10 GHz, 0,15 GHz, 0,20 GHz, 0,25 GHz, 0,30 GHz, 0,35 GHz und 0,40 GHz auf.

Das derartige Zwischenfrequenzsignal 13 wird zur Bestimmung der Informationen über ein Objekt oder Ziel, wie deren Entfernung, Lage bzw. Winkel, Bewegungsrichtung und Geschwindigkeit und/oder Eigenschaften der Objekte oder Ziele, genutzt.

In einer praktischen Umsetzung der Erfindung kann es vorgesehen werden, dass ein zusätzlicher Referenzempfänger angeordnet wird, welcher identisch zu der Empfängereinheit 9, aber ohne Antenne, also mit einer direkten Einkopplung des Primärsignals 5, betrieben wird. Das durch diesen Referenzempfänger erzeugte zwei Empfangssignal, zweite Zwischenfrequenzsignal oder zweite digitale Zwischenfrequenzsignal kann mit dem reflektierten Signal 7 vom Ziel 6, dem Zwischenfrequenzsignal 13 oder dem digitalen Zwischenfrequenzsignal 26 verglichen und zur Verbesserung der Qualität der Signalverarbeitung genutzt werden, wie nach dem Stand der Technik bekannt ist.

Das dieser Beschreibung zugrunde liegende Verfahren kann von einem Fachmann abgewandelt und beispielsweise auch auf Erkennungs- bzw. Ortungsverfahren übertragen werden, welche mit optischen oder akustischen Signalen arbeiten. Derart können beispielsweise zwei oder mehr optische oder akustische Frequenzkomponenten für ein Primärsignal eines Erkennungs- bzw. Ortungsverfahrens erzeugt werden. Eine Einschränkung des nutzbaren Frequenzbereichs auf nur elektromagnetische Wellen im Radiofrequenzbereich ist nicht vorgesehen.

## Patentansprüche

1. Radaranordnung (1), umfassend eine Sendeeinheit (2) mit einem ersten Oszillator (3) sowie einer Sendeantenne (4) und eine Empfängereinheit (9) mit einem zweiten Oszillator (11), einem erste Mischer (12) sowie einer Empfangsantenne (8), wobei in der Sendeeinheit (2) zwischen dem ersten Oszillator (3) und der Sendeantenne (4) ein erster Frequenzkammgenerator (16) angeordnet ist, wobei die vom ersten Frequenzkammgenerator erzeugten mehreren Frequenzkomponenten für das Primärsignal äquidistant zueinander sind, und
wobei in der Empfängereinheit (9) zwischen dem zweiten Oszillator (11) und dem ersten Mischer (12) ein zweiter Frequenzkammgenerator (18) angeordnet ist, welcher mehrere Frequenzkomponenten für ein Mischsignal (25) äquidistant zueinander und gegenüber den Frequenzkomponenten des Primärsignals (5) frequenzmäßig verschoben erzeugt.

2. Radaranordnung (1) nach Anspruch 1, **dadurch gekennzeichnet, dass** in der Empfängereinheit (9) zwischen dem zweiten Frequenzkammgenerator (18) und dem ersten Mischer (12) ein zweiter Mischer (20) angeordnet ist, wobei der zweite Mischer (20) mit einem dritten Oszillator (21) verbunden ist.

3. Radaranordnung (1) nach Anspruch 1 oder 2, **da-**

**durch gekennzeichnet, dass** in der Sendeeinheit (2) zwischen dem ersten Frequenzkammgenerator (16) und der Sendeantenne (4) ein zweiter Bandfilter (17) angeordnet ist.

4. Radaranordnung (1) nach einem der Ansprüche 1 bis 3, **dadurch gekennzeichnet, dass** zwischen dem zweiten Frequenzkammgenerator (18) und dem zweiten Mischer (20) ein dritter Bandfilter (19) angeordnet ist.

5. Radaranordnung (1) nach einem der Ansprüche 1 bis 4, **dadurch gekennzeichnet, dass** zwischen dem zweiten Mischer (20) und dem ersten Mischer (12) ein vierter Bandfilter (23) angeordnet ist.

6. Radaranordnung (1) nach einem der Ansprüche 1 bis 5, **dadurch gekennzeichnet, dass** ein Ausgang des ersten Mischers (12) mit einem Eingang eines Analog-Digital-Wandlers (15) verbunden ist und dass der Analog-Digital-Wandler (15) einen Ausgang zur Ausgabe eines digitalen Zwischenfrequenzsignals (26) aufweist.

7. Verfahren zum Betreiben einer Radaranordnung (1), wobei eine erste Oszillatorfrequenz (27) bereitgestellt wird, aus welcher zumindest mittelbar ein Primärsignal (5) erzeugt und über eine Sendeantenne (4) abgestrahlt wird und wobei eine zweite Oszillatorfrequenz (28) bereitgestellt wird, mittels derer zumindest mittelbar eine Zwischenfrequenz (13) durch ein Mischen eines empfangenen reflektierten Signals (7) mit der zweiten Oszillatorfrequenz (28) erzeugt wird, wobei senderseitig ein erster Frequenzkammgenerator (16) mit der erste Oszillatorfrequenz (27) zur Erzeugung eines mehrere Frequenzkomponenten beinhaltenden Primärsignals (5) angesteuert wird, wobei empfängerseitig ein zweiter Frequenzkammgenerator (18) mit der zweiten Oszillatorfrequenz (28) zur Erzeugung eines mehrere Frequenzkomponenten beinhaltenden Ausgangssignals angesteuert wird, wobei das derart erzeugte Ausgangssignal mit einer dritten Oszillatorfrequenz (29) gemischt und ein Mischsignal (25) erzeugt wird und wobei die Zwischenfrequenz (13) durch ein Mischen des empfangenen, reflektierten Signals (7) mit dem Mischsignal (25) erzeugt wird, wobei die senderseitig vom ersten Frequenzkammgenerator (16) erzeugten mehreren Frequenzkomponenten für das Primärsignal (5) äquidistant zueinander erzeugt werden und wobei die empfängerseitig vom zweiten Frequenzkammgenerator (18) erzeugten mehreren Frequenzkomponenten für das Mischsignal (25) äquidistant zueinander und gegenüber den Frequenzkomponenten des Primärsignals (5) frequenzmäßig verschoben erzeugt werden.

8. Verfahren nach Anspruch 7, **dadurch gekenn-**

**zeichnet, dass** das vom erster Frequenzkammgenerator (16) erzeugte Primärsignal (5) mittels eines zweiten Bandfilters (17) vor dem Abstrahlen über eine Sendeantenne (4) gefiltert wird.

9. Verfahren nach Anspruch 7 oder 8, **dadurch gekennzeichnet, dass** das mehrere Frequenzkomponenten beinhaltende Ausgangssignal des zweiten Frequenzkammgenerators (18) mittels eines dritten Bandfilters (19) gefiltert wird, bevor es mit der dritten Oszillatorfrequenz (29) gemischt wird.

10. Verfahren nach einem der Ansprüche 7 bis 9, **dadurch gekennzeichnet, dass** das Mischsignal (25) vor dem Mischen mit dem empfangenen, reflektierten Signal (7) mittels eines vierten Bandfilters (23) gefiltert wird.

11. Verfahren nach einem der Ansprüche 7 bis 10, **dadurch gekennzeichnet, dass** die Zwischenfrequenz (13) mittels eines Analog-Digital-Wandlers (15) in ein digitales Zwischenfrequenzsignal (26) gewandelt und zur weiteren Verarbeitung oder Analyse ausgegeben wird.

12. Verfahren nach einem der Ansprüche 7 bis 11, **dadurch gekennzeichnet, dass** die weitere Verarbeitung oder Analyse des digitalen Zwischenfrequenzsignals (26) in der Radaranordnung (1) durchgeführt wird und dass hierbei Informationen über Objekte, wie ihre Entfernung, ihre Lage bzw. Winkel, ihre Bewegungsrichtung und Geschwindigkeit und/oder Eigenschaften der Objekte ermittelt werden.

**Claims**

1. A radar arrangement (1), comprising a transmitting unit (2) with a first oscillator (3) and a transmitting antenna (4), and a receiving unit (9) with a second oscillator (11), a first mixer (12) and a receiving antenna (8), wherein a first frequency comb generator (16) is arranged in the receiving unit (2) between the first oscillator (3) and the transmitting antenna (4),

   wherein the several frequency components generated by the first frequency comb generator are equidistant to each other, and
   wherein a second frequency comb generator (18) is arranged in the receiving unit (9) between the second oscillator (11) and the first mixer (12) and generates several frequency components for a mixed signal (25) which equidistant to each other and frequency-shifted relative to the frequency components of the primary signal (5).

2. The radar arrangement (1) according to claim 1, **characterized in that** a second mixer (20) is arranged in the transmitting unit (9) between the second frequency comb generator (18) and the first mixer (12), wherein the second mixer (20) is connected to a third oscillator (21).

3. The radar arrangement (1) according to claim 1 or 2, **characterized in that** a second band filter (17) is arranged in the transmitting unit (2) between the first frequency comb generator (16) and the transmitting antenna (4).

4. The radar arrangement (1) according to claim 1 to 3, **characterized in that** a third band filter (19) is arranged between the second frequency comb generator (18) and the second mixer (20).

5. The radar arrangement according to claim 1 to 4, **characterized in that** a fourth band filter (23) is arranged between the second mixer (20) and the first mixer (12).

6. The radar arrangement according to claim 1 to 5, **characterized in that** an output of the first mixer (12) is connected to an input of an analogue-to-digital converter (15), and **in that** the analogue-to-digital converter (15) has an output for outputting a digital intermediate frequency signal (26).

7. A method for operating a radar arrangement (1), wherein a first oscillator frequency (27) is provided from which a primary signal (5) is generated at least indirectly and emitted via a transmitting antenna (4), and wherein a second oscillator frequency (28) is provided by means of which an intermediate frequency (13) is generated at least indirectly by the mixture of a received, reflected signal (7) with the second oscillator frequency (28), wherein a first frequency comb generator (16) is triggered with the first oscillator frequency (27) on the transmitter side to generate a primary signal (5) containing several frequency components, wherein a second comb generator (18) is triggered with the second oscillator frequency (28) on the receiver side to generate an output signal containing several frequency components, wherein the output signal generated in this way is mixed with a third oscillator frequency (29) and a mixed signal (25) is generated, and wherein the intermediate frequency (13) is generated by the mixture of the received, reflected signal (7) with the mixed signal (25), wherein the several frequency components are generated for the primary signal (5) by the first frequency comb generator (16) on the transmitter side and are equidistant to each other, and wherein the several frequency components are generated for the mixed signal (25) by the second frequency comb generator (18) on the receiver side and are equidistant to each other and frequency-shifted relative to the frequency components of the primary signal (5).

8. The method according to claim 7, **characterized in that** the primary signal (5) generated by the first frequency comb generator (16) is filtered by means of a second band filter (17) before being emitted via a transmitting antenna (4).

9. The method according to claim 7 or 8, **characterized in that** the output signal generated by the second frequency comb generator (18) contains several frequency components and is filtered by means of a third band filter (19) before being mixed with the third oscillator frequency (29).

10. The method according to one of the claims 7 to 9, **characterized in that** the mixed signal (25) is filtered by means of a fourth band filter (23) before being mixed with the received, reflected signal (7).

11. The method according to one of the claims 7 to 10, **characterized in that** the intermediate frequency (13) is converted into a digital intermediate frequency signal (26) by means of an analogue-to-digital converter (15) and is output for further processing or analysis.

12. The method according to one of the claims 7 to 11, **characterized in that** the further processing or analysis of the digital intermediate frequency signal (26) is carried out in the radar arrangement (1), and that information about objects, such as their distance, their position or angle, their direction of movement and speed and/or properties of the objects are determined during this further processing or analysis.

**Revendications**

1. Dispositif radar (1), comprenant une unité d'émission (2) comportant un premier oscillateur (3) ainsi qu'une antenne d'émission (4) et une unité de réception (9) comportant un deuxième oscillateur (11), un premier mélangeur (12) ainsi qu'une antenne de réception (8), dans lequel

un premier générateur de peigne de fréquences (16) est disposé dans l'unité d'émission (2) entre le premier oscillateur (3) et l'antenne d'émission (4), dans lequel les multiples composantes de fréquence du signal primaire générées par le premier générateur de peigne de fréquences sont équidistantes les unes des autres, et dans lequel

un deuxième générateur de peigne de fréquences (18) est disposé dans l'unité de réception (9) entre le deuxième oscillateur (11) et le premier mélangeur (12), et génère de multiples composantes de fréquence d'un signal mélangé (25) qui sont équidistantes les unes des autres et décalées en fréquence par rapport aux composantes de fréquence du signal primaire (5).

2. Dispositif radar (1) selon la revendication 1, **caractérisé en ce qu'**un deuxième mélangeur (20) est disposé dans l'unité de réception (9) entre le deuxième générateur de peigne de fréquences (18) et le premier mélangeur (12), dans lequel le deuxième mélangeur (20) est relié à un troisième oscillateur (21).

3. Dispositif radar (1) selon la revendication 1 ou 2, **caractérisé en ce qu'**un deuxième filtre passe-bande (17) est disposé dans l'unité d'émission (2) entre le premier générateur de peigne de fréquences (16) et l'antenne d'émission (4).

4. Dispositif radar (1) selon l'une quelconque des revendications 1 à 3, **caractérisé en ce qu'**un troisième filtre passe-bande (19) est disposé entre le deuxième générateur de peigne de fréquences (18) et le deuxième mélangeur (20).

5. Dispositif radar (1) selon l'une quelconque des revendications 1 à 4, **caractérisé en ce qu'**un quatrième filtre passe-bande (23) est disposé entre le deuxième mélangeur (20) et le premier mélangeur (12).

6. Dispositif radar (1) selon l'une quelconque des revendications 1 à 5, **caractérisé en ce qu'**une sortie du premier mélangeur (12) est reliée à une entrée d'un convertisseur analogique-numérique (15) et **en ce que** le convertisseur analogique-numérique (15) comporte une sortie destinée à délivrer un signal numérique à fréquence intermédiaire (26).

7. Procédé de fonctionnement d'un dispositif radar (1), dans lequel il est fourni une première fréquence d'oscillateur (27) à partir de laquelle un signal primaire (5) est généré au moins indirectement et est émis par l'intermédiaire d'une antenne d'émission (4) et dans lequel il est fourni une deuxième fréquence d'oscillateur (28) au moyen de laquelle une fréquence intermédiaire (13) est générée au moins indirectement par un mélange d'un signal réfléchi reçu (7) avec la deuxième fréquence d'oscillateur (28), dans lequel,

côté émetteur, un premier générateur de peigne de fréquences (16) est commandé à la première fréquence d'oscillateur (27) pour générer un signal primaire (5) contenant de multiples composantes de fréquence, dans lequel,
côté récepteur, un deuxième générateur de peigne de fréquences (18) est commandé à la deuxième fréquence d'oscillateur (28) pour générer un signal de sortie contenant de multiples composantes de fréquence, dans lequel le signal de sortie ainsi généré est mélangé à une troisième fréquence d'oscillateur (29) et un signal mélangé (25) est généré, et dans lequel la fréquence intermédiaire (13) est générée par un mélange du signal réfléchi reçu (7) au signal mélangé (25), dans lequel les multiples composantes de fréquence du signal primaire (5) générées côté émetteur par le premier générateur de peigne de fréquences (16) sont générées à équidistance les unes des autres, et dans lequel les multiples composantes de fréquence du signal mélangé (25) générées côté récepteur par le deuxième générateur de peigne de fréquences (18) sont générées à équidistance les unes des autres et décalées en fréquence par rapport aux composantes de fréquence du signal primaire (5).

8. Procédé selon la revendication 7, **caractérisé en ce que** le signal primaire (5) généré par le premier générateur de peigne de fréquences (16) est filtré au moyen d'un deuxième filtre passe-bande (17) avant d'être rayonné par l'intermédiaire d'une antenne d'émission (4).

9. Procédé selon la revendication 7 ou 8, **caractérisé en ce que** le signal de sortie du deuxième générateur de peigne de fréquences (18) contenant de multiples composantes de fréquence est filtré au moyen d'un troisième filtre passe-bande (19) avant d'être mélangé à la troisième fréquence d'oscillateur (29).

10. Procédé selon l'une quelconque des revendications 7 à 9, **caractérisé en ce que** le signal mélangé (25) est filtré au moyen d'un quatrième filtre passe-bande (23) avant d'être mélangé au signal réfléchi reçu (7).

11. Procédé selon l'une quelconque des revendications 7 à 10, **caractérisé en ce que** la fréquence intermédiaire (13) est convertie en un signal numérique à fréquence intermédiaire (26) au moyen d'un convertisseur analogique-numérique (15) et est délivrée en vue d'un traitement ou d'une analyse ultérieur(e).

12. Procédé selon l'une quelconque des revendications 7 à 11, **caractérisé en ce que** le traitement ou l'analyse ultérieur(e) du signal numérique à fréquence intermédiaire (26) est effectué(e) dans le dispositif radar (1) et **en ce que** des informations concernant des objets, telles que leur distance, leur position ou leur angle, leur direction de déplacement et leur vitesse et/ou des propriétés des objets, sont ainsi déterminées.

EP 3 811 103 B1

$$f = f_0 + n * \Delta f$$

$$n \in N$$

$$f = f_0 \pm f_{ZF} + n * \Delta f$$

Stand der Technik

Fig. 1

Fig. 2

Fig. 3

A

1,0  2,0  3,0  4,0  5,0  6,0  7,0  8,0  *f in GHz*

**Fig. 4a**

A

1,05  2,10  3,15  4,20  5,25  6,30  7,35  8,40  *f in GHz*

**Fig. 4b**

A

0,05  0,10  0,15  0,20  0,25  0,30  0,35  0,40  *f in GHz*

**Fig. 4c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018074179 A1
- US 5146616 A
- WO 9935510 A1